(19) Europäisches Patentamt
European Patent Office
Office européen des brevets

(11) Veröffentlichungsnummer: **0 031 460**
**B1**

(12) # EUROPÄISCHE PATENTSCHRIFT

(45) Veröffentlichungstag der Patentschrift: **12.09.84**

(51) Int. Cl.³: **C 22 B 60/02**, C 01 G 43/00

(21) Anmeldenummer: **80107363.6**

(22) Anmeldetag: **26.11.80**

(54) **Verfahren zur Gewinnung von Uran bzw. Uranverbindungen aus Phosphorsäure.**

(30) Priorität: **27.12.79 DE 2952476**

(43) Veröffentlichungstag der Anmeldung: **08.07.81 Patentblatt 81/27**

(45) Bekanntmachung des Hinweises auf die Patenterteilung: **12.09.84 Patentblatt 84/37**

(84) Benannte Vertragsstaaten: **AT BE DE FR GB IT NL SE**

(56) Entgegenhaltungen:
**EP - A - 0 032 184**
**US - A - 2 877 250**
**US - A - 3 156 524**

**CHEMICAL ABSTRACTS, Band 90, Nr. 14, 2. April 1979, Seite 445, Nr. 110731e Columbus, Ohio, U.S.A. I.A. SHEVCHUK et al.: "Extraction of zirconium(IV), uranium(VI), cobalt(II), iron(III), and copper(II) tripolyphosphate complexes"**
**CHEMICAL ABSTRACTS, Band 85, 1976, Seite 515, Nr. 131296d Columbus, Ohio, U.S.A. I.A. SHEVCHUK et al.: "Study of the extraction of uranium pyrophosphate complexes by solutions of alkylamines"**
**VINITI (1977) 3840-77**

(73) Patentinhaber: **Chemische Fabrik Budenheim Rudolf A. Oetker, Am Rhein 6, D-6501 Budenheim (DE)**
Patentinhaber: **Urangesellschaft mbH, *Bleichstrasse 60-62, D-6000 Frankfurt/Main 1 (DE)***

(72) Erfinder: **Beltz, Klaus, Dr., Schillerstrasse 13, D-6501 Budenheim (DE)**
Erfinder: **Frankenfeld, Klaus, Dr., Mainzer Landstrasse 288, D-6257 Hünfelden (DE)**
Erfinder: **Lehmann, Rainer, Dr., Am Kirschberg 7, D-6477 Limeshain (DE)**
Erfinder: **Zintl, Inge, Rosmarthastrasse 21, D-6500 Mainz-Finthen (DE)**

(74) Vertreter: **Fischer, Ernst, Dr., c/o Metallgesellschaft AG Reuterweg 14, D-6000 Frankfurt am Main 1 (DE)**

**EP 0 031 460 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Flüssig/Flüssig-Extraktion von Uran aus Phosphorsäure mit Hilfe von Alkylaminpolyphosphat- und/oder -Metaphosphat-Verbindungen, gelöst in wasserunlöslichen organischen Lösungsmitteln.

Zum Aufschluss von uranhaltigen Erzen werden u.a. Mineralsäuren verwendet, die nach dem Aufschlussprozess das Uran in gelöster Form enthalten. Es sind viele Anstrengungen unternommen worden, um das Uran aus solchen Säuren zu dem Zwecke der Urangewinnung zu entfernen.

Bei der Herstellung von Phosphorsäure nach dem sauren Aufschlussverfahren fallen bei der Verwendung von uranhaltigen Phosphaterzen ebenfalls uranhaltige Rohphosphorsäuren an. Für die Urangewinnung aus Phosphorsäure sind verschiedene Verfahren bekannt geworden, z.B. Extraktion von Uran mit Hilfe von Alkylpyrophosphatestern bzw. Extraktion mit Di-(2-äthylhexyl)-Phosphorsäure und Trioctylphosphinoxyd, wobei das letztere Verfahren besondere Bedeutung erlangt hat.

Die Urangewinnung aus Phosphorsäure hatte lange Zeit keine wirtschaftliche Bedeutung, weil die Urankonzentration sowohl in den Phosphaterzen als auch in den anfallenden Säuren zu gering war, als dass sie lohnend erschien.

Zur Urangewinnung fanden daher vorwiegend Verfahren Anwendung, die als Rohstoffe höher konzentrierte Uranerze verarbeiteten. Dabei wird u.a. das Uran durch die Behandlung des Erzes mit verdünnter Schwefelsäure, gegebenenfalls unter Mitverwendung eines Oxydationsmittels, aus dem Mineral gelöst und in die Schwefelsäure überführt; aus der verdünnten Säure wird das Uran durch andere Verfahrensschritte abgetrennt.

Eines dieser Abtrennverfahren stellt z.B. die Lösungsmittelextraktion des Urans mit Hilfe von höher molekularen Alkylaminen dar. So wird z.B. in der US-PS 2 877 250 ein Flüssig/Flüssig-Extraktionsverfahren zur Gewinnung von Uran aus wässerigen sauren Lösungen mit Aminen, gelöst in wasserunlöslichen nichtpolaren organischen Lösungsmitteln, beschrieben. Daraus geht hervor, dass eine gute Uran-Extraktion mit Aminen aus solchen Lösungen möglich ist, die eine niedrige bis mittlere Konzentration an Sulfat, Phosphat, Fluorid und Acetat und eine hohe Konzentration an Chlorid sowie eine hohe Konzentration an Nitrat bei mittlerem pH-Wert haben. Zum Beispiel wird aus einer 0,7 molaren Phosphorsäure (ca. 4,8% $P_2O_5$) nach dem bekannten Verfahren Uran in gewissem Umfang extrahiert, während aus einer 1,3 molaren Phosphorsäure (ca. 8,6% $P_2O_5$) kein Uran mehr gewonnen werden kann. Ebenso muss die Konzentration an Schwefelsäure kleiner als 1 molar (ca. 9,4% $H_2SO_4$) sein, um nennenswerte Mengen an Uran nach dem bekannten Verfahren gewinnen zu können.

Darüber hinaus ist in der US-PS 3 409 415 ein Verfahren beschrieben, um 3wertige Lanthanide und Actinide aus sulfatfreien Lösungen mit organischen Säuren, ausgewählt aus der Gruppe der Monocarboxyl-, Polycarboxyl- und Aminpolycarboxylsäuren, mit Hilfe von wasserunmischbaren organischen Lösungen von hochmolekularen Aminen zu gewinnen. Der pH-Wert der Lösungen, aus denen die Metallionen extrahiert werden, liegt bei ca. 2,5 bis 10,3.

Aus Chemical Abstracts 85 1976 131 296 d ist es bekannt, Uran mit primären Aminen in Gegenwart von Tetranatriumpyrophosphat zu extrahieren. Solch eine Extraktion erfolgt nicht aus stark saurer Lösung, sondern aus Lösungen mit einem pH-Wert von 5–7.

Die Verfahren zur Uranextraktion aus Phosphorsäure mit Hilfe von Alkylpyrophosphorsäureestern bzw. mit Di-(2-äthylhexyl)-Phosphorsäure und Trioctylphosphinoxid, arbeiten in einem Säurekonzentrationsbereich von ca. 5,3 molar (d.h. ca. 30% $P_2O_5$).

Auch aus «Chemical Abstracts» 90, 1979, S. 445 Ref. 110 731e ist das Extrahieren von Urantripolyphosphat-Komplexen mit in Chloroform gelösten langkettigen Alkylaminen bekannt. Dort handelt es sich jedoch nicht um phosphorsaure Ausgangslösungen.

Diese bekannten Verfahren haben jedoch den Nachteil, dass im Falle der Verwendung von Alkylpyrophosphorsäureestern ein hoher Chemikalienverbrauch durch die Unbeständigkeit des Reagenzes gegeben ist. Im Falle der Verwendung von Di-(2-äthylhexyl)-Phosphorsäure und Trioctylphosphinoxid wird das Verfahren einmal durch hohe finanzielle Aufwendungen für die Beschaffung des Reagenzes belastet, zum anderen sind umfangreiche Verfahrensschritte bei der Kreislaufführung der leichten Reagenzphase notwendig, um den kontinuierlichen Bereich des Gesamtablaufs der Urangewinnung zu gewährleisten.

Es bestand daher ein Bedürfnis nach einem Verfahren, um Uran aus sauren Lösungen mit niedriger bis hoher Säure-Konzentration gewinnen zu können.

Die Erfindung löst diese Aufgabe mit einem Verfahren zur Gewinnung von Uran aus wässriger, Uran in gelöster Form enthaltender Phosphorsäure mit Hilfe von Aminen, gelöst in wasserunlöslichen organischen Lösungsmitteln, in Gegenwart von Komplexbildnern. Bei einem Verfahren der genannten Art besteht die Erfindung darin, dass man die wässrige Phosphorsäure mit einer langkettigen Alkylamin-Polyphosphat- und/oder -Metaphosphat-Verbindung, gelöst in einem organischen Lösungsmittel, in Kontakt bringt, wobei das Alkylamin aus einem sekundären oder tertiären Alkylamin besteht und im Alkylrest 8 bis 30, vorzugsweise 8 bis 18 C-Atome enthält und der Formel

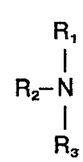

entspricht, wobei $R_1$ Wasserstoff oder Alkylradikale und $R_2$ und $R_3$ Alkylradikale bedeuten, der Polyphosphat- und/oder Metaphosphat-Rest

2 bis 10 000 P-Atome pro Molekül hat und geradekettig und/oder vernetztkettig bzw. ringförmig sein kann, und das Uran aus der wässrigen in die organische Phase überführt, aus der man das Uran reextrahiert.

Das vorliegende Patentbegehren schliesst einen Schutz für den Gegenstand der europäischen Patentanmeldung EP-A-0 032 184 aus.

Der Literatur ist zu entnehmen, dass die Extraktion des Urans aus Säurelösungen mit Hilfe von Alkylamin durch die Anwesenheit von grösseren Mengen Phosphationen gestört bzw. unterbunden wird. Deshalb haben die Alkylamine keine Verwendung für die Extraktion des Urans aus Phosphorsäure gefunden. Bei dem nassen Aufschlussverfahren der Phosphaterze mit Schwefelsäure fallen die Rohphosphorsäurelösungen üblicherweise mit einem $P_2O_5$-Gehalt von 30% an. Dies entspricht einer Phosphorsäurekonzentration von 4,2 Mol pro kg Rohsäure.

Es wurde nun überraschenderweise gefunden, dass sekundäre und tertiäre Alkylamine in Verbindung mit Polyphosphat- und/oder Metaphosphationen als hervorragende Reagenzien zur Extraktion des Urans aus Phosphorsäurelösungen verwendet werden können.

Die Extraktion des Urans aus Phosphorsäure kann im Konzentrationsbereich zwischen 0,1 und ca. 8 Mol/kg zu extrahierender Säure (0,7% bis ca. 57% $P_2O_5$), vorzugsweise zwischen 1 bis ca. 6 Mol/kg zu extrahierender Säure (7% bis ca. 43% $P_2O_5$), durchgeführt werden. Die obere Konzentrationsgrenze der zu extrahierenden Phosphorsäure wird durch die Viskosität der Säure und deren Einflüsse auf die Durchführbarkeit der Extraktion begrenzt.

Fernerhin war es für den Fachmann völlig überraschend, dass aus polyphosphathaltigen und/oder metaphosphathaltigen Phosphorsäuren das sekundäre oder tertiäre Alkylamin selektiv nur mit den Polyphosphationen und/oder Metaphosphationen reagiert und eine Verbindung bildet, die in mit Wasser und Phosphorsäure nicht mischbaren organischen Lösungsmitteln löslich ist. Diese Verbindung stellt das wirksame Reagenz zur Uranextraktion dar. Für einen Fachmann war es daher überraschend, dass Polyphosphat- und/oder Metaphosphationen in Verbindung mit sekundärem oder tertiärem Alkylamin die Uranextraktion sogar aus hochprozentigen Phosphorsäuren in guter Ausbeute ermöglichen, während hingegen Mono-Phosphationen bereits in Konzentration von ca. $> 1$ molar die Uranextraktion in Verbindung mit sekundären oder tertiären Alkylaminen aus Säurelösungen verhindern.

Damit ist ein neuer technischer, völlig überraschender Tatbestand geschaffen.

Alkylamin-Polyphosphat und/oder -Metaphosphat kann während des Extraktionsverfahrens auf unterschiedliche Art gebildet werden. Es ist z.B. möglich, ein Alkali- und/oder Ammoniumsalz der Polyphosphorsäure und/oder Metaphosphorsäure in der zu behandelnden Mineralsäure zu lösen, wobei sich die entsprechende freie Polyphosphorsäure und/oder Metaphosphorsäure bildet, die dann von dem zugesetzten sekundären oder tertiären Alkylamin aufgenommen wird und das Extraktionsmittel darstellt. Es ist auch möglich, anstelle eines Salzes die freie Poly- und/oder Metaphosphorsäure zu verwenden, wie sie z.B. beim Eindampfen von Orthophosphorsäure entstehen.

Ferner ist es möglich, die Polyphosphorsäure und/oder Metaphosphorsäure durch Behandlung einer wässerigen Alkali- und/oder Ammoniumpolyphosphat- und/oder Metaphosphatlösung mit einem Kationenaustauscherharz gesondert herzustellen und das Eluat direkt in die organische Lösung aus sekundärem oder teritärem Alkylamin und Lösungsmittel einzuleiten. Dabei bilden sich 2 Phasen aus, wobei die Polyphosphorsäure und/oder Metaphosphorsäure in die organische Phase wandert und mit dem sekundären oder tertiären Alkylamin die wirksame Verbindung bildet. Die schwere Phase besteht aus einer wässerigen Lösung von überschüssiger Polyphosphorsäure und/oder Metaphosphorsäure, die abgetrennt wird. Diese Arbeitsweise ist insbesondere für ein späteres kontinuierliches Gegenstrom-Extraktionsverfahren vorteilhaft.

Es können auch Mischungen von sekundären und tertiären Aminen eingesetzt werden.

Manche sekundäre oder tertiäre Alkylamine können allerdings bei ihrer Verwendbarkeit für die Extraktion des Urans aus Phosphorsäure einer Einschränkung unterliegen. Sie können nämlich als Amin-Polyphosphat und/oder -Metaphosphat-Verbindung bei der Extraktion eine dritte Phase bilden, so dass sich ein geordneter Verlauf des beanspruchten Verfahrens nur unter Zuhilfenahme von weiteren Massnahmen empfiehlt.

Die Bildung einer dritten Phase kann verhindert werden, wenn man zu der organischen Phase aus Aminpolyphosphat und/oder -Metaphosphat und organischem Lösungsmittel zusätzlich andere organische Stoffe mit lösungsvermittelnden Eigenschaften wie z.B. n-Octanol, iso-Decanol, Reaktionsgemische aus der Oxysynthese im Bereich von $C_8$ bis $C_{12}$, Cyclohexanon oder Tridecanol zusetzt. Schwierigkeiten bei der Extraktion selbst treten dadurch nicht auf. In einem kontinuierlichen Verfahrensablauf mit Rückextraktion des Urans und Rückgewinnung des Lösungsmittels bedeutet der Zusatz eines Lösungsvermittlers jedoch eine beträchtliche Komplizierung infolge der Veränderung der Verteilungsgleichgewichte zwischen den Phasen.

Die für das erfindungsgemässe Verfahren brauchbaren sekundären oder tertiären Alkylamine sollen darüber hinaus mit Wasser und Phosphorsäure nicht mischbar sein. Bei hoher Löslichkeit des Amins tritt nämlich Aminverlust und Kontaminierung der wässerigen mineralsauren Phase mit Amin ein. Die Löslichkeit der Amine in Wasser und Phosphorsäure sollte $< 1\%$ sein.

Die folgende Tabelle gibt Aufschluss über die Löslichkeit in Wasser verschiedener sekundärer und tertiärer Alkylamine bei 20°C:

Amine: 1) Isotridecylamin
2) Di-sek.-butylamin
3) Tri-n-octylamin
4) Tri-iso-octylamin
5) Tri-iso-nonylamin
6) Tri-isodecylamin
7) Tri-dodecylamin

| Amin | 1 | 2 | 3 | 4 | 5 | 6 | 7 |
|---|---|---|---|---|---|---|---|
| 1) Löslichkeit der Amine in $H_2O$ (%) | 0,1 | 0,7 | 0,04 | 0,1 | 0,3 | 0,05 | 0,1 |

Bei der praktischen Durchführung des erfindungsgemässen Verfahrens ist das Verhalten des Systems Amin–organisches Lösungsmittel bzw. des Systems Amin–Polyphosphat- und/oder -Metaphosphat–organisches Lösungsmittel gegenüber der wässerigen Phase von Bedeutung für die Auswahl des brauchbaren sekundären oder tertiären Alkylamins.

Sekundäre und tertiäre Amine mit einer Kohlenstoffatomanzahl in dem Alkylrest von 8 bis 30, insbesondere zwischen 8 und 18, werden in dem erfindungsgemässen Verfahren verwendet. Als besonders brauchbar haben sich z.B. die langkettigen Amine iso-Tridecylamin, Tri-iso-Octylamin, Tri-iso-Decylamin, Tri-dodecylamin, Di-Laurylamin und Di-iso-octadecylamin erwiesen, wobei nicht nur die reinen Amine, sondern auch technische Amin-Mischungen brauchbar sind.

Die gemäss der Erfindung verwendeten Alkylamine sind hochviskose Stoffe und deshalb in dem erfindungsgemässen Extraktionsverfahren schlecht zu handhaben. Zweckmässigerweise werden die Amine in organischen Lösungsmitteln gelöst. Diese organischen Lösungsmittel müssen folgende Bedingungen erfüllen: Sie dürfen nicht mit Wasser und Phosphorsäure mischbar sein bzw. Wasser und Phosphorsäure aufnehmen. Diese Bedingungen für das organische Lösungsmittel gelten sinngemäss auch gegenüber der wässerigalkalischen Phase bei der Rückextraktion des Urans aus der organischen Phase.

Die organischen Lösungsmittel müssen weiterhin eine gute Löslichkeit für die sekundären und tertiären Alkylamine und die Aminpolyphosphate und/oder -Metaphosphate und das extrahierte Uran aufweisen, dürfen mit diesen aber selbst nicht reagieren.

Als besonders brauchbar haben sich bei dem erfindungsgemässen Verfahren als Lösungsmittel folgende Gruppen erwiesen:

a) aliphatische und aromatische Kohlenwasserstoffe in Form von definierten Verbindungen, Mischungen oder Destillationsfraktionen

b) chlorierte Kohlenwasserstoffe,

c) Äther, Ketone, Ester, soweit sie die obengenannten Bedingungen erfüllen.

Als brauchbare Polyphosphat- und/oder Metaphosphat-Komponenten zur Herstellung der Amin-Polyphosphate und/oder -Metaphosphate haben sich folgende Stoffe erwiesen:

Di-Phosphorsäure
Tri-Phosphorsäure
Tetra-Phosphorsäure
mittel- bis langkettige Polyphosphorsäure
vernetztkettige Polyphosphorsäure, hergestellt aus Kurrol'schem Salz
Tri-Metaphosphorsäure
Tetra-Metaphosphorsäure

sowie Mischungen davon, wie sie z.B. beim Aufkonzentrieren von Monophosphorsäure entstehen.

Diese Poly- und/oder Metaphosphorsäuren bilden mit den beschriebenen Aminen Verbindungen, die in den beschriebenen Lösungsmitteln löslich sind und das Extraktionsmittel für das erfindungsgemässe Verfahren darstellen.

Die Extraktionswirkung der einzelnen Alkylaminpoly- und/oder -Metaphosphate für Uran aus Phosphorsäure ist unterschiedlich.

Die unterschiedliche Extraktionswirkung der einzelnen Polyphosphat- und/oder Metaphosphatverbindungen wird am Beispiel einer vorgereinigten nordafrikanischen Roh-Phosphorsäure und Rein-Phosphorsäure mit definiertem $Uran^{IV}$- und $Uran^{VI}$-Gehalt aufgezeigt.

| Alkylamin | extrahierte Uran-Menge (% vom Einsatz) | | |
|---|---|---|---|
| | Rohphosphorsäure | Reinphosphorsäure mit $Uran^{IV}$ | Reinphosphorsäure mit $Uran^{VI}$ |
| 1) ohne Polyphosphat | 3 | 7 | 4 |
| 2) Diphosphorsäure | 12 | 41 | 10 |
| 3) Triphosphorsäure | 62 | 55 | 29 |
| 4) Tetraphosphorsäure | 88 | 60 | 35 |
| 5) langkettige Polyphosphorsäure | 92 | 76 | 74 |
| 6) vernetztkettige Polyphosphorsäure | 55 | 67 | 64 |
| 7) Mischung von 5 u. 6 im Verhältnis 1:1 | 94 | 71 | 72 |
| 8) Trimetaphosphorsäure | 32 | 31 | 12 |

Aus den Ergebnissen geht hervor, dass diejenigen Aminpolyphosphatverbindungen für die Extraktion von Uran aus Phosphorsäure am besten geeignet sind, die ein langkettiges und/oder vernetztkettiges Polyphosphation enthalten.

Die Konzentration der Phosphorsäure hat ebenfalls einen gewissen Einfluss auf die Extrahierbarkeit des Urans nach dem erfindungsgemässen Verfahren, wobei aber keine prinzipielle Einschränkung hinsichtlich der Durchführbarkeit des erfindungsgemässen Verfahrens gegeben ist.

Die nachstehende Tabelle gibt einen Überblick über den Einfluss der $P_2O_5$-Konzentration und die unterschiedlichen Säurearten. Die darin aufgeführten Ergebnisse wurden unter vergleichbaren Bedingungen erhalten, wobei als Phosphorsäuren

1) Rein-Phosphorsäure
2) Roh-Phosphorsäure aus Togo-Phosphat-Erz
3) Roh-Phosphorsäure aus marokkanischem Phosphat-Erz
4) Roh-Phosphorsäure aus Florida-Phosphat-Erz

im Konzentrationsbereich von 10–50% $P_2O_5$ eingesetzt wurden.

Als Extraktionsmittel wurde eine Alkylaminpolyphosphat-Verbindung verwendet, deren Polyphosphat-Rest einen Polimerisationsgrad von n = 30 hatte. Die Extraktionsversuche wurden einstufig im Phasen-Verhältnis (Gewichts-Verhältnis) 1 : 1 bei 20 °C durchgeführt.

| Säureart: | 1 | 2 | 3 | 4 |
|---|---|---|---|---|
| Säure-Konzentration %$P_2O_5$ | Extrahierte U-Menge (% vom Einsatz) | | | |
| 10 | 98 | 60 | 39 | 58 |
| 20 | 88 | 89 | 85 | 82 |
| 25 | 61 | 76 | 76 | 91 |
| 30 | 74 | 84 | 92 | 90 |
| 35 | 40 | 74 | 73 | 64 |
| 40 | 40 | 63 | 63 | 25 |
| 45 | 41 | 46 | 26 | 6 |
| 50 | 30 | 25 | 8 | 3 |

Das beanspruchte Verfahren sollte jeweils der Art der Phosphorsäure, aus der Uran extrahiert werden soll, angepasst werden. Das Verfahren kann variiert werden durch unterschiedliche Konzentration des Amins in der organischen Phase, durch unterschiedliches Phasenverhältnis von organischer zu anorganischer Phase sowie durch die Anzahl der Extraktionsstufen.

Es hat sich herausgestellt, dass es vorteilhaft ist, die Konzentration des Amins in dem Lösungsmittel in den Grenzen 0,1–10 Gew.-% zu halten.

Das Phasenverhältnis von organischer zu anorganischer Phase ist ebenfalls keine kritische Grösse und kann in den Grenzen von z.B. 1 : 4 bis 4 : 1 schwanken, wobei diese Grenzen jederzeit nach beiden Seiten hin überschritten werden können.

Zum Beispiel wurden bei Versuchen über den Einfluss des Phasenverhältnisses auf die Extrahierbarkeit des Urans aus Phosphorsäure bei einstufiger Extraktion unter Verwendung von Diphosphorsäure mit Alkylamin folgende Werte gefunden:

Phasenverhältnis, anorganische : organische Phase in Gewichtsteilen

| | 1:0,25 | 1:0,5 | 1:1 | 1:2 | 1:4 |
|---|---|---|---|---|---|
| extrahierte Menge Uran in % vom Einsatz | 22,1 | 34,9 | 51,8 | 63,9 | 77,2 |

In der Praxis wird das erfindungsgemässe Extraktionsverfahren als mehrstufiges Gegenstromextraktionsverfahren betrieben. Die Anzahl der erforderlichen Stufen ist von der Art des verwendeten Alkylamin-Polyphosphats und/oder -Metaphosphats und der Konzentration und Art der Phosphorsäure abhängig. Praktische Versuche haben gezeigt, dass 3–8 Extraktionsstufen ausreichend sind, um eine vollständige Extraktion des Urans zu erreichen.

Wenn Uran aus Rohphosphorsäuren extrahiert werden soll, die einen hohen Gehalt an organischen Stoffen aufweisen, sollen die organischen Stoffe in einem vorgeschalteten Reinigungsprozess minimiert werden, was z.B. durch Behandlung der Säure mit Adsorptionsmitteln wie Aktivkohle oder Entfärbungserden oder durch Behandlung mit nicht mischbaren organischen Lösungsmitteln wie z.B. Dieselöl geschehen kann, da andernfalls die organischen Stoffe leicht zur Emulsionsbildung Anlass geben und das Extraktionsverfahren empfindlich stören.

Im Gegensatz zu bisher bekannten Uran-Extraktionsverfahren spielt die Wertigkeit des Urans bei dem erfindungsgemässen Verfahren keine gravierende Rolle. Vergleichsversuche mit definierten 4- und 6wertigen Uransalzen zeigen, dass sowohl das 4wertige, als auch das 6wertige Uran extrahiert wird. Gewisse Unterschiede sind in der Verwendung der unterschiedlichen Phosphate gegeben.

Die nachstehende Tabelle gibt einige Versuchsergebnisse wieder, die bei einstufiger Extraktion im Phasenverhältnis 1 : 1 aus einer 30% $P_2O_5$ enthaltenden Reinphosphorsäure erhalten wurden.

| Amin + Poly- und Metaphosphorsäure | Extrahierte U-Menge (% vom Einsatz) | |
|---|---|---|
| | Uran 4wertig | Uran 6wertig |
| 1) ohne | 7 | 4 |
| 2) Diphosphorsäure | 41 | 10 |
| 3) Triphosphorsäure | 55 | 29 |
| 4) Trimetaphosphorsäure | 31 | 12 |
| 5) Tetrapolyphosphorsäure | 60 | 35 |
| 6) langkettige Polyphosphorsäure | 76 | 74 |
| 7) vernetztkettige Polyphosphorsäure | 67 | 64 |
| 8) Mischung aus 6 + 7 1:1 | 71 | 72 |

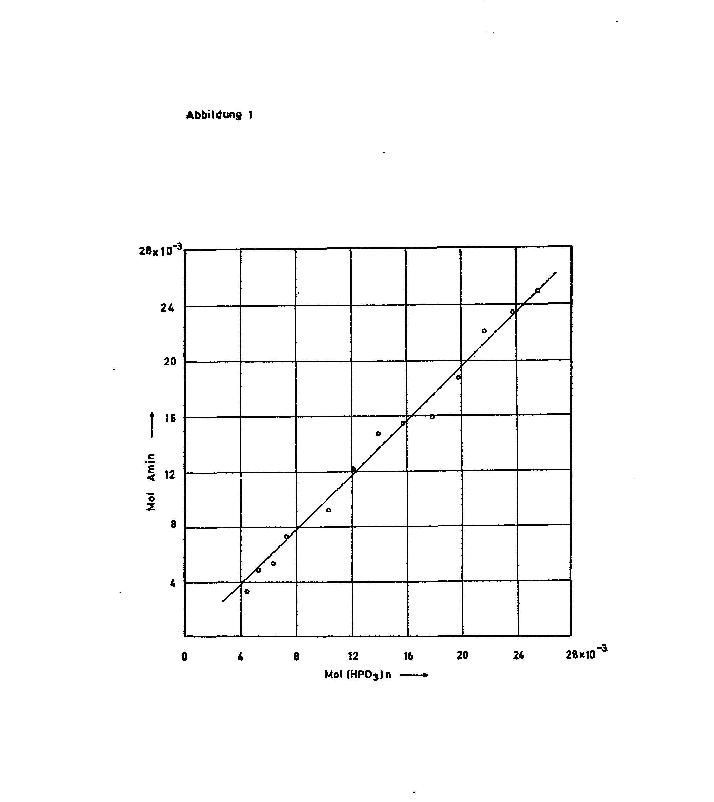

Die bei dem erfindungsgemässen Verfahren verwendeten Alkylamin-Polyphosphate und/oder -Metaphosphate sind hochmolekulare Stoffe, deren Molekulargewicht zwischen 300 und ca. 4 300 000, vorzugsweise zwischen 1000 und 70 000, liegen kann. Bei der Verwendung einer langkettigen Polyphosphorsäure mit einem Polymerisationsgrad von n = 30 und einem Amin von 36 C-Atomen ergeben sich Verbindungen mit einem Molekulargewicht von ca. 13 000, wobei das molare N : P-Verhältnis ca. 1 : 1 beträgt. Aus Abbildung 1 geht die quantitative Beziehung zwischen den Reaktionspartnern Amin und Polyphosphorsäure bei der Bildung von Aminpolyphosphat hervor. Auf der Abszisse ist die Aufnahme von langkettigen Polyphosphat-Ionen in Mol aufgetragen. Auf der Ordinate sind die im Lösungsmittel gelösten Mengen an Amin in Mol angegeben. Es zeigt sich, dass eine lineare Beziehung zwischen den miteinander reagierenden Mengen an Polyphosphat und Amin besteht.

Werden andere Ausgangsstoffe zur Bildung des Extraktionsmittels im Rahmen des erfindungsgemässen Verfahrens gewählt, dann schwankt das molare N : P-Verhältnis in den Grenzen von 1 : 2 bis 2 : 1.

Daraus ergibt sich die Forderung, dass zur Erzielung eines guten Extraktionsergebnisses eine ausreichende Menge sowohl an sekundärem oder tertiärem Amin als auch an Polyphosphat vorliegen muss.

Die Extraktionsmittel können auf unterschiedliche Art und Weise gebildet werden, und zwar können erstens die Polyphosphat- und/oder Metaphosphationen in Form von Salzen oder als freie Säuren der uranhaltigen Phosphorsäure zugesetzt werden. Das erforderliche sekundäre oder tertiäre Alkylamin wird, gelöst in einem wasserunlöslichen organischen Lösungsmittel, in das Extraktionssystem eingebracht. Das gelöste Amin nimmt die Polyphosphat- und/oder Metaphosphationen aus der anorganischen Phase unter Bildung des Extraktionsmittels auf. Das Uran wird aus der anorganischen Phase durch das Extraktionsmittel in die organische Phase überführt. Aus der organischen Phase wird das Uran in bekannter Weise reextrahiert.

Zweitens kann die Herstellung des Extraktionsmittels in einem separaten Verfahrensschritt erfolgen.

Diese Arbeitsweise ist zweckmässig, wenn das erfindungsgemässe Verfahren als kontinuierliches Gegenstromextraktionsverfahren betrieben wird. In diesem Falle lässt man das sekundäre oder tertiäre Amin, gelöst in einem wasserunlöslichen organischen Lösungsmittel, mit freier Poly- und/oder Metaphosphorsäure reagieren. Die freie Poly- und/oder Metaphosphorsäure kann sowohl als verdünnte wässerige Lösung als auch in hochkonzentrierter From zugegeben werden. Sie kann z.B. durch Ionenaustausch aus den Polyphosphat- und/oder Metaphosphatsalzlösungen hergestellt werden.

Dabei bilden sich zwei getrennte Flüssigkeitsphasen aus. Die organische Phase besteht aus dem organischen Lösungsmittel und dem gebildeten Alkylaminpolyphosphat und/oder Alkylaminmetaphosphat. Die wässerige Phase enthält gegebenenfalls den Überschuss an freien Poly- und/oder Metaphosphorsäuren. Die wässerige Phase wird abgetrennt.

In bekannten Extraktionsapparaten wird die organische Phase, bestehend aus Alkylaminpolyphosphat und/oder Alkylaminmetaphosphat, gelöst in einem organischen Lösungsmittel, mit der uranhaltigen Phosphorsäure, die die anorgani-

sche Phase darstellt, in Kontakt gebracht. Das Uran wird in der organischen Phase aufgenommen.

Es ist auch möglich, die reine Aminpolyphosphat- und/oder -Metaphosphatverbindung zu dem organischen Lösungsmittel zuzugeben und in dieser Form bei dem erfindungsgemässen Verfahren zu verwenden.

Die von Uran befreite Phosphorsäure enthält weder Amin noch organisches Lösungsmittel, da diese nicht in die wässrige Phase wandern. Die Phosphorsäure kann als solche bzw. zur Weiterverarbeitung auf ihre Salze verwendet oder anderen weitergehenden Reinigungsprozessen zugeführt werden.

Das erfindungsgemässe Verfahren wird üblicherweise bei Raumtemperatur durchgeführt. Es kann auch bei anderen Temperaturen betrieben werden, wobei die Grenzen nach unten durch den Anstieg der Viskosität in den Phasen und nach oben durch den Siedepunkt des organischen Lösungsmittels gegeben sind.

Die uranhaltige organische Phase wird mit einer wässerigen alkalisch reagierenden Lösung behandelt. Dadurch wird das Extraktionsmittel in die beiden Komponenten aufgespalten. Das dabei gebildete Alkalipolyphosphat und/oder -Metaphosphat und das Uran wandern in die wässerige alkalische Phase. Das Alkylamin verbleibt als freie Base in der organischen Phase. Diese wird erneut dem Extraktionsprozess für die Uranabtrennung aus der Phosphorsäure zugeführt. Aus der wässerigen alkalischen Phase wird das Uran in bekannter Weise abgetrennt.

Der Verfahrensschritt der Rückextraktion des Urans aus der organischen Phase in die wässerige alkalische Phase kann chargenweise, mehrfach einstufig, oder auch als Gegenstromextraktion betrieben werden.

Beispiel 1

Eine grössere Menge an Rohphosphorsäure, die nach dem Nassverfahren aus marokkanischem Phosphaterz hergestellt worden war, wurde durch langzeitliche Dekantation und A-Kohle-Behandlung sowohl von den Feststoffen als auch von organischen Verunreinigungen befreit. Die gewonnene blanke grüne Rohsäure enthielt:

29,9 % $P_2O_5$
1,4 % $H_2SO_4$
1,6 % HF
0,16 % Fe
0,0135% U

Von diesem Rohphosphorsäurevorrat aus wurde über einen Zeitraum von 20 Tagen kontinuierlich eine sechsstufige Flüssig/Flüssig-Gegenstromextraktion zur Entfernung des Urans der Phosphorsäure betrieben. Die Extraktionsanlage bestand aus einer hintereinandergeschalteten Mixer-Settler-Anordnung.

Die Gegenstromextraktionsanlage wurde mit einer Rohsäuremenge 2,9 kg/h aus einem Vorlagetank gespeist. Die Gegenstromextraktionsanlage wurde im Phasenverhältnis 1 : 3 Gewichtsteile organischer Phase zu anorganischer Phase betrieben.

Die eingespeiste Menge an organischer Phase betrug 0,97 kg/h. Sie hatte die Zusammensetzung:

97,8% Naphtabenzin Sdp. 140 °C
2,2% Tridodecylaminpolyphosphat.

Die organische Phase wurde in einer separaten Mixer-Settler-Apparatur kontinuierlich hergestellt, indem der Rückstrom des im Verfahren umlaufenden Lösungsmittel-Tridodecylamin-Gemisches mit einer überschüssigen Menge einer kontinuierlich hergestellten wässrigen Lösung von langkettiger Polyphosphorsäure mit ca. 30 P-Gliedern umgesetzt wurde, wobei die wässrige Lösung der langkettigen Polyphosphorsäure durch Behandlung einer verdünnten Natriumpolyphosphatlösung mit einem stark sauren Ionenaustauscher in der $H^+$-Form gewonnen worden war. Dabei bildeten sich zwei Phasen aus, von denen die wässerige Phase die überschüssige Polyphosphorsäure enthielt und abgetrennt wurde.

Im Verlauf der sechsstufigen Gegenstromextraktion erfolgte die Abreicherung des Urans aus der Rohphosphorsäure. Nach den einzelnen Extraktionsstufen stellte sich in der Rohphosphorsäure folgende U-Konzentration ein:

| | |
|---|---|
| Zulauf Rohsäure | 0,0135% |
| nach 1. Extraktionsstufe | 0,0062% |
| nach 2. Extraktionsstufe | 0,0026% |
| nach 3. Extraktionsstufe | 0,0012% |
| nach 4. Extraktionsstufe | 0,0005% |
| nach 5. Extraktionsstufe | 0,0002% |
| nach 6. Extraktionsstufe | 0,0002% |

Die aus der Gegenstromextraktion ablaufende uranfreie Rohphosphorsäure war in ihrer Konzentration unverändert. Eine Kontaminierung der Rohsäure mit dem Lösungsmittel oder Alkylamin konnte nicht nachgewiesen werden. Die Rohphosphorsäure wurde auf andere Produkte weiterverarbeitet. Die Ausbeute an extrahiertem Uran aus der Rohphosphorsäure betrug 98%.

Die aus der Phosphorsäure-Gegenstrom-Extraktionsanlage ablaufende organische Phase wurde in eine zweite Gegenstromextraktionsanlage überführt und dort mit einer wässerigen 5%igen $Na_2CO_3$-Lösung behandelt. Die zweite Extraktionsanlage wurde dreistufig betrieben. Das Phasenverhältnis betrug 4 : 1 Gewichtsteile organischer Phase zu anorganischer Phase.

Die in die Gegenstromextraktion einlaufenden Mengen betrugen:

| | |
|---|---|
| organische Phase | 0,970 kg/h |
| anorganische Phase | 0,242 kg/h. |

Die aus der Extraktion ablaufenden Mengen betrugen:

| | |
|---|---|
| organische Phase | 0,966 kg/h |
| anorganische Phase | 0,246 kg/h. |

Während des Extraktionsprozesses erfolgte eine Spaltung der Tridodecylaminpolyphosphatverbindung in die freie Base, die in der organischen Phase verblieb, und die Polyphosphationen, die zusammen mit Uran in die wässerige Sodaphase wanderten.

Bei der Durchführung der Gegenstromextraktion stellten sich in den wässerigen Sodaphasen

der einzelnen Extraktionsstufen folgende Uran-Pegel ein, wobei der Zulauf der uranhaltigen organischen Phase in die Extraktionsstufe 1 und der Zulauf der anorganischen Sodaphase in die Extraktionsstufe 3 erfolgte:

| | |
|---|---|
| nach Extraktionsstufe 1 | 0,158 % |
| nach Extraktionsstufe 2 | 0,0015% |
| nach Extraktionsstufe 3 | $<$0,0002% |

Die ablaufende filtrierte Sodaphase enthielt 0,19% $U_3O_8$.

Sie wurde durch Fällung mit NaOH auf ein Urankonzentrat weiterverarbeitet.

Beispiel 2

Eine Rohphosphorsäure, die nach den Nassverfahren aus Togo-Phosphaterz hergestellt worden war, wurde durch ein Reinigungsverfahren sowohl von den Feststoffen als auch von organischen Verunreinigungen befreit. Die erhaltene blanke grüne Rohsäure enthielt:

| | |
|---|---|
| 31,4 | % $P_2O_5$ |
| 1,2 | % $H_2SO_4$ |
| 0,6 | % HF |
| 0,64 | % Fe |
| 0,0092% | U |

Über einen Zeitraum von 10 Tagen wurde kontinuierlich eine achtstufige Flüssig/Flüssig-Gegenstromextraktion zur Entfernung des Urans der Phosphorsäure betrieben. Die Extraktionsanlage bestand aus einer hintereinandergeschalteten Mixer-Settler-Anordnung.

Die Gegenstromextraktionsanlage wurde mit einer Rohsäuremenge von 3,2 kg/h aus einem Vorlagetank gespeist. Die Gegenstromextraktionsanlage wurde im Phasenverhältnis 1 : 3 Gewichtsteile organische Phase zu anorganischer Phase betrieben.

Die eingespeiste Menge an organischer Phase betrug 1,07 kg/h.

Sie hatte die Zusammensetzung:

97,8% Kerosin Sdp. 250–300 °C

2,2% Dilaurylamintrimetaphosphat

Die organische Phase wurde in einer separaten Mixer-Settler-Apparatur kontinuierlich hergestellt, indem der Rückstrom des im Verfahren umlaufenden Lösungsmittel-Dilaurylamin-Gemisches mit einer überschüssigen Menge einer kontinuierlich hergestellten wässerigen Lösung von Trimetaphosphorsäure umgesetzt wurde, wobei die wässerige Lösung der Trimetaphosphorsäure durch Behandlung einer verdünnten Natriumtrimetaphosphatlösung mit einem stark sauren Ionenaustauscher in der $H^+$-Form gewonnen worden war. Es bildeten sich dabei zwei Phasen aus, von denen die wässerige Phase die überschüssige Trimetaphosphorsäure enthielt und abgetrennt wurde.

Im Verlauf der achtstufigen Gegenstromextraktion erfolgte die Abreicherung des Urans aus der Rohphosphorsäure. Nach den einzelnen Extraktionsstufen stellte sich in der Rohphosphorsäure folgende U-Konzentration ein:

| | |
|---|---|
| Zulauf Rohsäure | 0,0092% |
| nach 1. Extraktionsstufe | 0,0068% |
| nach 2. Extraktionsstufe | 0,0050% |
| nach 3. Extraktionsstufe | 0,0035% |
| nach 4. Extraktionsstufe | 0,0027% |
| nach 5. Extraktionsstufe | 0,0018% |
| nach 6. Extraktionsstufe | 0,0013% |
| nach 7. Extraktionsstufe | 0,0009% |
| nach 8. Extraktionsstufe | 0,0005% |

Die aus der Gegenstromextraktion ablaufende Rohphosphorsäure war in ihrer Konzentration unverändert. Eine Kontaminierung der Rohsäure mit dem Lösungsmittel oder Alkylamin konnte nicht nachgewiesen werden. Die Rohphosphorsäure wurde auf andere Produkte weiterverarbeitet. Die Ausbeute an extrahiertem Uran aus der Rohphosphorsäure betrug 95%.

Die aus der Phosphorsäure-Gegenstrom-Extraktionsanlage ablaufende organische Phase wurde in eine zweite Gegenstromextraktionsanlage überführt und dort mit einer wässrigen 5%igen $Na_2CO_3$-Lösung behandelt. Die zweite Extraktionsanlage wurde dreistufig betrieben. Das Phasenverhältnis war 5 : 1 Gewichtsteile organischer Phase zu anorganischer Phase.

Die in die Gegenstromextraktion einlaufenden Mengen betrugen:

| | |
|---|---|
| organische Phase | 1,07 kg/h |
| anorganische Phase | 0,214 kg/h. |

Die aus der Extraktion ablaufenden Mengen betrugen:

| | |
|---|---|
| organische Phase | 1,03 kg/h |
| anorganische Phase | 0,218 kg/h. |

Während des Extraktionsprozesses erfolgte eine Spaltung der Dilaurylamintrimetaphosphatverbindung in die freie Base, die in der organischen Phase verblieb, und die Trimetaphosphatanionen, die zusammen mit Uran in die wässerige Sodaphase wanderten.

Bei der Durchführung der Gegenstromextraktion stellten sich in den wässerigen Sodaphasen der einzelnen Extraktionsstufen folgende Uran-Pegel ein, wobei der Zulauf der uranhaltigen organischen Phase in die Extraktionsstufe 1 und der Zulauf der anorganischen Sodaphase in die Extraktionsstufe 3 erfolgte:

| | |
|---|---|
| nach Extraktionsstufe 1 | 0,130 % |
| nach Extraktionsstufe 2 | 0,0013% |
| nach Extraktionsstufe 3 | $<$0,0002%. |

Die ablaufende filtrierte Sodaphase enthielt 0,153% $U_3O_8$.

Sie wurde durch Fällung mit NaOH auf ein Urankonzentrat weiterverarbeitet.

Beispiel 3

Eine grössere Menge an Rohphosphorsäure, die nach dem Nassverfahren aus marokkanischem Phosphaterz hergestellt worden war, wurde durch langzeitliche Dekantation und A-Kohle-Behandlung sowohl von den Feststoffen als auch von organischen Verunreinigungen befreit. Die erhaltene blanke grüne Rohsäure enthielt:

| | |
|---|---|
| 29,9 | % $P_2O_5$ |
| 1,4 | % $H_2SO_4$ |
| 1,6 | % HF |

0,16 % Fe
0,0135% U

Aus diesem Rohsäurevorrat wurde ständig eine Säuremenge von 6,0 kg/h abgezogen und der Uranextraktion zugeführt. Der Rohsäurestrom wurde in zwei Teilströme aufgespalten. 12% der Rohsäure wurden in einem Vakuum-Umlaufverdampfer auf einen $P_2O_5$-Gehalt von 80% eingedampft. Dadurch wurde ein grosser Anteil der Monophosphorsäure in ein Gemisch von vorwiegend kurzkettigen Polyphosphorsäuren überführt. Die so hergestellte Polyphosphorsäure wurde dem verbliebenen Teilstrom von 88% der Rohsäure wieder zugeführt. Es entstand dadurch ein Gemisch von Mono- und Polyphosphorsäuren mit einem Gesamt-$P_2O_5$-Gehalt von 32,3%. Die Menge der Rohsäure wurde von 6,0 kg/h auf 5,55 kg/h reduziert und der Extraktion zugeführt.

Die Gegenstromextraktionsanlage wurde sechsstufig im Phasenverhältnis 1 : 3 (Gewichtsteilen) organische Phase zu anorganischer Phase betrieben. Die eingespeiste Menge an organischer Phase betrug 1,85 kg/h. Die organische Phase bestand aus einem Gemisch von

98,0% Kerosin Sdp. 250–300 °C
2,0% Tridodecylamin.

Beim Kontakt der polyphosphathaltigen anorganischen Phase mit der tridodecylaminhaltigen organischen Phase bildete sich in der organischen Phase das wirksame Reagenz für die Uranextraktion. Die aus der Gegenstromextraktion ablaufende anorganische Phase betrug 5,55 kg/h und hatte einen $P_2O_5$-Gehalt von 32,3% und einen U-Gehalt von $<0,0003\%$. Eine Verschleppung von dem Lösungsmittel oder Alkylamin in die ausextrahierte Säure konnte nicht nachgewiesen werden.

Die Ausbeute an extrahiertem Uran betrug 98%.

Die aus der Gegenstromextraktion ablaufende organische Phase wurde weiterverarbeitet wie in Beispiel 1 beschrieben.

Die ablaufende Sodaphase enthielt 0,202% $U_3O_8$.

Beispiel 4

Die bei einem chemisch-technischen Prozess als Nebenprodukt anfallende Phosphorsäurelösung war an Uran angereichert und enthielt:

42,2 % $P_2O_5$
2,2 % $H_2SO_4$
0,36 % HF
0,54 % Fe
0.0715% U

Diese Phosphorsäurelösung wurde chargenweise durch eine einstufige Flüssig/Flüssig-Extraktion von dem gelösten Uran abgereichert.

Das verwendete organische Lösungsmittel hatte die Zusammensetzung

94,0% Cyclohexan
3,0% Isodecanol
3,0% Isotridecylamin.

In ein geschlossenes Extraktionsgefäss mit Rührwerk wurden 100 kg der Phosphorsäurelösung eingefüllt und mit festen 1,80 kg Natriumtetrapolyphosphat versetzt. Unter leichtem Rühren wurde das Salz in der Säure aufgelöst. Danach wurde die Phosphorsäurelösung sofort mit 100 kg des Lösungsmittelgemisches versetzt und 15 Minuten lang intensiv gerührt. Danach wurde das Rührwerk stillgesetzt und die Phasen getrennt. Die schwere Phosphorsäurephase wurde in einen Sammeltank überführt und später auf andere Düngemittel weiterverarbeitet. Die extrahierte Phosphorsäurelösung enthielt noch 0,0079% Uran. Die Ausbeute an extrahiertem Uran betrug 89%.

Die uranhaltige Lösungsmittelphase wurde ebenfalls in einen Sammeltank überführt, und von dort aus in einer dreistufigen Gegenstromextraktionsanlage mit einer 10%igen wässrigen Natronlauge behandelt. Die Gegenstromextraktion wurde dreistufig im Phasenverhältnis von 1 : 10 (wässrige NaOH-Phase/organische Phase) (Gewichtsteile) durchgeführt.

Das Alkylamin verblieb als freie Base in dem organischen Lösungsmittel. Das Polyphosphation wanderte zusammen mit dem Uran in die wässrige Natronlaugephase, wobei das Uran als gelbes Uranoxyd ausgefällt wurde.

Die organische Phase wurde nach Ablauf aus der Gegenstromextraktion auf ihre Zusammensetzung hin kontrolliert, nachgeschärft und erneut als Lösungsmittel in der einstufigen Phosphorsäureextraktion verwendet.

Aus der wässrigen NaOH-Lösung wurde das ausgefällte Uranoxyd durch Filtration abgetrennt. Das NaOH-Filtrat konnte nach dem Nachstellen des NaOH-Gehaltes erneut in einen zweiten Extraktionszyklus in der Gegenstromextraktion verwendet werden.

Der erhaltene Filterkuchen wurde gewaschen und bei 200 °C getrocknet.

Beispiel 5

Bei einem Laugungsprozess eines uranhaltigen Materials mit verdünnter reiner Phosphorsäure fiel eine filtrierte uranhaltige Phosphorsäurelösung mit

15,2 % $P_2O_5$
0,185% U
0,1 % Ca
0,1 % Mg
0,03 % Fe

an.

In einer hintereinandergeschalteten sechsstufigen Mixer-Settler-Extraktionsapparatur wurde die uranhaltige Phosphorsäure im Gegenstrom mit einer organischen Lösungsmittelphase extrahiert.

Die organische Phase hatte die Zusammensetzung

95,0% Tetrachlorkohlenstoff
5,0% Tridodecylamintetrapolyphosphat

Die Gegenstromextraktion der Phosphorsäurelösung wurde im Phasenverhältnis 1 : 2 (Gewichtsteile) organische Phase zu anorganischer Phase betrieben.

Die eingespeisten Mengen betrugen:

| | |
|---|---|
| anorganische Phase | 2,66 kg/h |
| organische Phase | 1,33 kg/h. |

Die Verweilzeiten der Phasen in den einzelnen Mixer-Settler-Stufen betrugen

| | |
|---|---|
| Mixer | 20 Minuten |
| Settler | 50 Minuten. |

Die organische Phase wurde in einer separaten Mixer-Settler-Apparatur kontinuierlich hergestellt, indem der rücklaufende nachgeschärfte Lösungsmittelstrom mit der freien Aminbase mit einer überschüssigen Menge an Tetrapolyphosphorsäure umgesetzt wurde, wobei die freie Polyphosphorsäure durch einen Ionenaustauschprozess hergestellt worden war. Dabei bildeten sich zwei Phasen aus, von denen die wässerige Phase die überschüssige Tetrapolyphosphorsäure enthielt und abgetrennt wurde.

Die aus der Gegenstromextraktionsapparatur ablaufende Phosphorsäure hatte einen Resturangehalt von 0,0093%. Die Ausbeute an extrahiertem Uran betrug 95%. Die uranabgereicherte Phosphorsäure wurde im Düngemittelsektor verarbeitet.

Die aus der Gegenstromextraktion ablaufende organische Phase enthielt das extrahierte Uran und das Extraktionsmittel. Sie wurde in eine zweite dreistufige Gegenstromextraktionsanlage überführt und dort mit einer wässrigen Lösung mit 15% $NH_4HCO_3$ und 3,5% $NH_3$ reextrahiert. Die Reextraktionsapparatur wurde im Phasenverhältnis von 4 : 1 (Gewichtsteile) organische Phase zu anorganischer Phase betrieben. Bei dem Reextraktionsprozess wurde die Tridodecylamintetrapolyphosphatverbindung gespalten. Das Amin verblieb als freie Base in der organischen Lösungsmittelphase und wurde erneut mit einer wässrigen Tetrapolyphosphorsäurelösung umgesetzt.

Die ablaufende anorganische Phase hatte nach der Filtration einen Urangehalt von 1,96%. Durch Zufügen von weiteren $NH_3$-Mengen wurde das gelöste Uran als Ammoniumuranyltricarbonat ausgefällt, abfiltriert und bei 1000 °C in $U_3O_8$ konvertiert.

## Patentansprüche

1. Verfahren zur Gewinnung von Uran aus wässriger, Uran in gelöster Form enthaltender Phosphorsäure mit Hilfe von Aminen, gelöst in wasserunlöslichen organischen Lösungsmitteln, in Gegenwart von Komplexbildnern, dadurch gekennzeichnet, dass man die wässrige Phosphorsäure mit einer langkettigen Alkylamin-Polyphosphat- und/oder -Metaphosphat-Verbindung, gelöst in einem organischen Lösungsmittel, in Kontakt bringt, wobei das Alkylamin aus einem sekundären oder tertiären Alkylamin besteht und im Alkylrest 8 bis 30 C-Atome enthält und der Formel

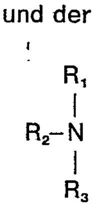

entspricht, wobei $R_1$ Wasserstoff oder Alkylradikale und $R_2$ und $R_3$ Alkylradikale bedeuten, der Polyphosphat- und/oder Metaphosphat-Rest 2 bis 10 000 P-Atome pro Molekül hat und geradkettig und/oder vernetztkettig bzw. ringförmig sein kann, und das Uran aus der wässrigen in die organische Phase überführt wird, aus der man das Uran reextrahiert.

2. Verfahren nach Anspruch 1, dadurch gekennzeichnet, dass man als wässrige Phosphorsäure eine solche verwendet, die praktisch frei von organischen Verunreinigungen ist.

3. Verfahren nach den Ansprüchen 1 und 2, dadurch gekennzeichnet, dass das verwendete Extraktionsmittel hergestellt worden ist durch Lösen von Polyphosphat und/oder Metaphosphat-Ionen in der zur Gewinnung von Uran bzw. Uranverbindungen verwendeten wässrigen Phosphorsäure und Kontaktieren der wässrigen Phase mit einer organischen Phase aus dem in einem organischen Lösungsmittel gelösten langkettigen sekundären oder tertiären Alkylamin.

## Claims

1. A process of recovering uranium from aqueous phosphoric acid which contains dissolved uranium with the aid of amines dissolved in water-insoluble organic solvents, in the presence of complexing agents, characterized in that the aqueous phosphoric acid is contacted with a long-chain alkylamine polyphosphate compound and/or alkylamine metaphosphate compound, which is dissolved in an organic solvent, the alkylamine consists fo a secondary or tertiary alkylamine and in its alkyl residue contains 8 to 30 carbon atoms and corresponds to the formula

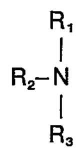

wherein $R_1$ represents hydrogen or alkyl radicals and $R_2$ and $R_3$ represent alkyl radicals, the polyphosphate and/or metaphosphate residue contains 2 to 10 000 phosphorus atoms per molecule and may consist of straight chains and/or crosslinked chains or ring chains, and the uranium is transformed from the aqueous phase into the organic phase, from which the uranium is re-extracted.

2. A process according to claim 1, characterized in that an aqueous phosphoric acid is used which is virtually free of organic impurities.

3. A process according to claims 1 and 2, characterized in that the extraction solvent which is employed has been made in that polyphosphate ions and/or metaphosphate ions are dissolved in the phosphoric acid that is used to recover uranium or uranium compounds and the aqueous phase is contacted with an organic phase consisting of the long-chain secondary or tertiary alkylamine dissolved in an organic solvent.

**Revendications**

1. Procédé d'extraction d'uranium à partir d'acide phosphorique aqueux contenant l'uranium à l'état dissous au moyen d'amines dissoutes dans des solvants organiques insolubles dans l'eau, en présence d'agents complexants, caractérisé en ce qu'on met l'acide phosphorique aqueux en contact avec un polyphosphate et/ou un métaphosphate d'alkylamine à longue chaîne, dissous dans un solvant organique, l'alkylamine étant constituée par une alkylamine secondaire ou tertiaire et contenant, dans le reste alkyle, 8 à 30 atomes de carbone et correspondant à la formule

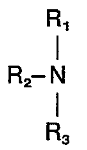

dans laquelle $R_1$ représente de l'hydrogène ou des radicaux alkyle et $R_2$ et $R_3$ représentent des radicaux alkyle, le reste polyphosphate et/ou métaphosphate comportant 2 à 10 000 atomes de phosphore par molécule et pouvant être linéaire et/ou ramifié ou cyclique, et en ce qu'on déplace l'uranium de la phase aqueuse dans la phase organique à partir de laquelle on réextrait l'uranium.

2. Procédé selon la revendication 1, caractérisé en ce qu'on utilise, comme acide phosphorique aqueux, un acide pratiquement exempt d'impuretés organiques.

3. Procédé selon les revendications 1 et 2, caractérisé en ce que l'agent d'extraction utilisé a été préparé par dissolution d'un polyphosphate et/ou d'ions métaphosphate dans l'acide phosphorique aqueux utilisé pour l'obtention d'uranium ou de composés d'uranium et par mise en contact de la phase aqueuse avec une phase organique constituée par l'alkylamine secondaire ou tertiaire à longue chaîne dissoute dans un solvant organique.

Abbildung 1